# EUROPÄISCHE PATENTANMELDUNG

(11) **EP 3 217 091 A1**
(43) Veröffentlichungstag der Anmeldung: **13.09.2017**
(21) Anmeldenummer: 17020096.8
(22) Anmeldetag: 13.03.2017
(51) Int. Cl.: F21V 31/04, B29C 39/00, F21S 4/22, F21S 4/26

(54) **VOLLVERGOSSENES, FLEXIBLES LEUCHTDIODENBAND MIT HOMOGENEM LICHTAUSTRITT UND 360°-ABSTRAHLUNG UND VERFAHREN ZU DESSEN HERSTELLUNG**

(30) Priorität: 11.03.2016 DE 102016002910
(71) Anmelder: CLD Germany GmbH, 90491 Nürnberg (DE); Barthelme, Nicola, 90425 Nürnberg (DE)
(72) Erfinder: Eistetter, Stefan, 90425 Nürnberg (DE); Astrup, Hans, 91301 Forchheim (DE)
(74) Vertreter: Dreykorn-Lindner, Werner

(57) **Zusammenfassung**

Im Stand der Technik sind unterschiedlich ausgestaltete Lichtschläuche, LED-Röhren und biegeelastische Leuchtdiodenbänder bekannt.
Um ein Leuchtdiodenband derart weiterzuentwickeln, dass dem Benutzer ein flexibles, d.h. biegbares Leuchtdiodenband zur Verfügung gestellt wird, welches einen Abstrahlwinkel von 360⁰ mit einem homogenen Lichtaustritt und eine verbesserte Lichtausbeute aufweist und baukastenartig aufgebaut werden kann, weist das Leuchtdiodenband
• ein Gehäuse (U) aus transluzenter Vergußmasse (V2, V4),
• einen im Innern des Gehäuses (U) vertikal zur Erstreckungsrichtung angeordneten länglichen Steg (ST), welcher mit dem Gehäuse (U) in Verbindung steht,
• auf dem Steg (ST) angeordnete Chip-Leuchtdioden (LED),
• eine teilweise reflektierende Beschichtung (B) der Innenseite des Gehäuses (U) und
• eine das Gehäuseinnere auffüllende transparente Vergußmasse (V1)auf, derart, dass das Licht der Chip-Leuchtdioden (LED) von den Innenflächen des Gehäuses (U) teilweise reflektiert und durch die transluzente Vergußmasse (V2) des Gehäuses (U) über 360⁰ diffus abgestrahlt wird, wobei das Leuchtdiodenband vertikal zur Erstreckungsrichtung biegeelastisch ist.
Die Erfindung liegt auf dem Gebiet der Leuchtdiodenbänder.

## Beschreibung

Die Erfindung betrifft ein vollvergossenes, flexibles Leuchtdiodenband mit homogenem Lichtaustritt und 360°-Abstrahlung. Weiterhin betrifft die Erfindung, gemäß Patentanspruch 14, ein Verfahren zu dessen Herstellung.

Lichtschläuche meist flexibler Art, insbesondere zu Dekorationszwecken und Werbezwecken sind seit langem bekannt. Beispielsweise ist aus der DE 102 43 948 A1 ein flexibler Lichtschlauch und dessen Anwendung in einem Leuchtkörper bekannt, welcher vorzugsweise in der Lichtwerbung auf der Basis von LEDs benutzt wird. Im Einzelnen sind innerhalb eines lichtdurchlässigen Plasteschlauches zwei Kabel als Plusschiene und als Minusschiene geführt und zwischen der Plusschiene und der Minusschiene sind mindestens zwei oder mehrere als Parallelschaltung angeordnete Gruppen von mindestens zwei oder mehrere in Reihe geschalteten LEDs elektrisch miteinander und mit einem Vorwiderstand verbunden. Alle LEDs sind mit ihrer Lichtaustrittsseite in eine Richtung gerichtet und einzelne Abschnitte innerhalb des Plasteschlauches sind mit zusätzlichen Schlauchstücken, vorzugsweise ein Schrumpfschlauch, zwischen den LEDs versehen, wobei diese Schlauchstücke die Plusschiene, die Minusschiene und das Verbindungskabel zwischen den LEDs umfassen und eine bessere Fixierung der LEDs und der Verbindungsdrähte innerhalb des Lichtschlauches ermöglichen, ohne dass die Flexibilität des Lichtschlauches behindert wird. Schließlich sind die Hohlräume innerhalb des Plasteschlauches mit einem transparenten, elastischen Kunststoff verfüllt, wodurch ein weiterer Sperreffekt gegen eindringende Feuchtigkeit erzielt wird. Auf einer Seite des Leuchtkörpers, welcher aus einem Kunststoffkörper besteht, ist mindestens eine Nut eingefräst, in die der Lichtschlauch als Lichtquelle eingelegt und mit einem Kunstharz vergossen oder angeklebt ist. Um eine breitere Lichtausbreitung zu realisieren weiten sich die Nutwände der Nut nach außen hin auf. Weiterhin ist aus der DE 201 19 861 U1 ein flexibler transparenter Lichtschlauch aus Kunststoff bekannt, bei dem die Schlauchwand des flexiblen transparenten Schlauches mit einem strangförmigen biegbaren und nach Verbiegen die Form beibehaltenden Verstärkungselement verbunden ist. Das Verstärkungselement ist vorzugsweise in die Schlauchwand integriert und weist vorzugsweise einen im Wesentlichen kreisförmigen Querschnitt auf. Bei der Herstellung eines derartigen transparenten Schlauches kann das Verstärkungselement direkt beim Extrudieren des Schlauches in die Schlauchwand eingelegt werden. Im Inneren des Schlauches ist eine Vielzahl von kleinen Leuchtelementen angeordnet, die über elektrische Anschlussdrähte, die in einem Stecker enden und mit elektrischer Spannung versorgt werden.

Weiterhin ist aus der DE 20 2005 002 425 U1 ein flexibler Lichtschlauch bekannt, welcher mindestens zwei parallel verlaufende Kupferdrähte zur Stromversorgung, einen biegsamen undurchsichtigen aber lichtdurchlässigen Streifen, mehrere mit multiplen LEDs ausgestattete Platinen sowie ein lichtdurchlässiges Formteil, welches streifenförmig ausgebildet ist, aufweist. Der Streifen ist im Querschnitt viereckig ausgebildet und weist ein der Länge nach durchgehend ausgebildetes Durchgangsloch sowie einen seitlich des Durchgangslochs angeordneten Schlitz auf, der für die Montage der Platinen vorgesehen ist. Jede Platine weist an ihren beiden Enden jeweils eine Kontaktklemme auf. Die Platinen werden durch den Schlitz in das Durchgangsloch des Streifens eingeführt, wobei die Kontaktklemmen der Platinen mit den Kupferdrähten elektrisch verbunden werden. Das von den nebeneinander angeordneten LEDs ausgestrahlte Licht wird durch das Formteil, welches eine im Querschnitt nach außen halbrunde Fläche aufweist, nach außen abgegeben. Dabei überlappt sich der abgegebene Lichtstrahl nebeneinanderliegender LEDs in einer Überlappungszone. Weiterhin ist eine Plastikhülle bestehend aus undurchsichtigem PVC vorgesehen, die unterhalb des Formteils beidseits und am Boden des Streifens angeordnet ist. Bei einer weiteren Ausführungsform des Lichtschlauchs sind die mit multiplen LEDs versehenen Platinen von einem Streifen umhüllt, der durch Spritzgießen aus weißem bzw. andersfarbigem Kunststoff hergestellt ist. Der Streifen hat dabei an seinem oberen Ende eine Kerbe und einen längs ausgebildeten Schlitz, welcher dazu dient, die Platine in das Durchgangsloch des Streifens einbringen zu können. Um den Beleuchtungseffekt zu erhöhen, kann die Kerbe zusätzlich mit einem Reflexfilm versehen sein. Bei dieser Ausführungsform ist der Streifen aus undurchsichtigem Kunststoff hergestellt. Um mit dem Lichtschlauch beispielsweise das Wort "OPEN" zu formen, sind mehrere Fixierelemente zur Befestigung des Lichtschlauchs an einer Platte vorgesehen.

Auch sind Nachbildungen von Neon-Röhren bekannt. Beispielsweise ist aus der WO 20141/46438 A1 eine LED-Röhre mit einem großen Abstrahlwinkel von 120 Grad bis 360 Grad bekannt. Die LED-Röhre weist eine Abdeckung, mindestens eine LED-Lichtleiste/LED-Band mit LEDs mit einem Abstrahlwinkel von ca. 120 Grad, und eine Lichtleistenbefestigung auf. Die Lichtstrahlen der LEDs werden durch die Abdeckung reflektiert und zur Beleuchtung bereitgestellt, so dass dunkle Zone innerhalb der LED-Röhre beseitigt oder stark reduziert werden können. In einer ersten Ausführungsform ist die Anzahl der LED-Lichtleisten auf der an der axialen Öffnung der LED-Röhre angeordneten Montagefläche Eins, wobei der Abstrahlwinkel der LED-Röhre etwa 200 Grad ist. In einer zweiten Ausführungsform ist auf zwei Montageflächen je eine LED-Lichtleiste angeordnet, wobei die beiden Montageflächen an der inneren Seite der axialen Öffnung angeordnet und derart miteinander verbunden sind, dass diese die Form eines umgekehrten Vs ausbilden. In dieser Ausführungsform ist der Abstrahlwinkel der LED-Röhre etwa 300 Grad. In einer dritten Ausführungsform bilden drei Montageflächen eine π-Form aus, wodurch ein Abstrahlwinkel der LED-Röhre etwa um 330 Grad erreicht wird. In einer vierten Ausführungsform mit vier Montageflächen, welche Quaderförmig angeordnet sind, kann ein Abstrahlwinkel der LED-Röhre etwa um 360 Grad erreicht werden, Die einzelne LED-Lichtleiste ist auf der jeweiligen Montagefläche über thermisch leitfähigen Klebstoff fixiert und zur Wärmeableitung sind Rillen an der Außenseite der Lichtleistenbefestigung vorgesehen.

Eine ähnliche LED-Röhre mit einem 360 Grad Abstrahlwinkel ist aus dem CN 204083923-U bekannt. Die sich zwischen den elektrischen Anschlüssen erstreckende Glasröhre, wobei die elektrischen Anschlüssen beidseitig am freien Ende der Glasröhre angeordnet sind, ist mit einer Beschichtung mit fluoreszierendem Material von 20- 25µm versehen. Das sich im Innern der LED-Röhre ersteckende Lichtband mit einer Vielzahl von LEDs ist mittels thermisch leitfähigen Acryl, Silikon oder ähnlichem Material an der Mantelfläche der Glasröhre befestigt/angeklebt, wodurch der Glaskörper auch zur Kühlung dient.

Eine weitere LED-Röhre flexibler Art mit einem Abstrahlwinkel von 360 Grad ist aus dem CN 204026493-U bekannt. Die LED-Lampe besteht aus einer länglichen röhrenförmigen Umhüllung aus lichtdurchlässigem Material mit einer in Erstreckungsrichtung verlaufenden annähernd quadratischen Aussparung. In der Aussparung ist ein annähernd quadratischer hohler Kern angeordnet, welcher einen in Längsrichtung verlaufenden Schlitz und zwei hierzu um jeweils 90 Grad versetzte Nuten in der Kernwand aufweist. Weiterhin ist im hohlen Kern eine flexible Leiterplatte eingebracht, welche beidseitig in den Nuten gehaltenen ist und welche Rücken an Rücken angeordnete SMD-LEDs trägt. Dabei ist zwischen den SMD-LEDs und der inneren Mantelfläche des Kerns ein Abstand vorgesehen.

Weiterhin ist aus der CN 103618039-A ein Herstellungsverfahren für eine LED-Lichtquelle mit einem 360-Grad-Leuchtwinkel bekannt, bei der im Inneren einer aus Silikon gespritzten Umhüllung ein S-förmiger Träger aus Aluminium vorgesehen ist, auf welchem auf Vorder- und Rückseite LED-chips angeordnet sind.

Ein ähnliches Herstellungsverfahren für eine LED-Lichtquelle mit einem 360-Grad-Leuchtwinkel ist aus der CN 103904071-A bekannt, bei der ein transparentes Substrat für LED-Lampenstreifen vorgesehen ist, wobei auf die beiden Flächen des transparenten Substrats mittels Fluoreszenz-Kleber die LEDs symmetrisch angeordnet sind.

Weiterhin sind Leuchtdiodenbänder - auch flexibler Art - seit langem bekannt. Beispielsweise ist aus der DE 10 2012 110 136 A1 ein LED-Band bekannt, welches eine Vielzahl von Leuchtdioden aufweist, die in einer Reihe angeordnet sind und in einem flexiblen langgestreckten Gehäuse eingegossen sind. Das Gehäuse bildet eine, insbesondere U-förmige oder V-förmige, Gussform aus, die zwei sich nach oben (z-Richtung) erstreckende Seitenwandungen umfasst, d.h. mit zwei sich nach oben zur offenen Seite der Gussform erstreckenden Seitenwandungen, die in einem unteren Bereich, insbesondere durch einen Boden, miteinander verbunden sind. Die Leuchtdioden werden in die Gussform eingebracht; die Gussform wird anschließend mit Vergußmasse befüllt. Von unten nach oben (in z-Richtung) betrachtet, wird die Gussform bis zu einer Markierung, d.h. eine durch zumindest eine an einer Seitenwandung horizontal verlaufende Markierungskante, wobei der unmittelbar oberhalb der Markierungskante anschließende Wandabschnitt der Seitenwandung vertikal ausgerichtet ist oder weiter als die Markierungskante in den Innenraum (der Gussform) hineinragt (auch zur Ausbildung eines zumindest teilweise "unstetigen" Übergangs von einem oberen Wandabschnitt zu einem unteren Wandabschnitt der Seitenwandung), mit einer ersten Vergußmasse befüllt. Ab der Markierung ist die Gussform mit einer zweiten Vergußmasse befüllt. Dabei können auch weitere Vergußmassen oberhalb bzw. unterhalb der Markierung angeordnet sein. An der Markierung bildet sich eine horizontale Grenzlinie zwischen erster und zweiter Vergußmasse aus, wobei die erste Vergußmasse nach dem Aushärten den Boden der Vergußform für die zweite Vergußmasse bildet. Die erste Vergußmasse ist insbesondere eine transparente Vergußmasse; die zweite Vergußmasse ist insbesondere eine opake Vergußmasse. Als Vergußmassen eigenen sich grundsätzlich Polyurethan(PU)- Werkstoffe. Insbesondere ist nun die Markierung durch zumindest eine an einer der Seitenwandungen, insbesondere an beiden der Seitenwandungen, horizontal verlaufende Markierungskante gebildet. Der sich unmittelbar oberhalb der Markierungskante anschließende Wandabschnitt der Seitenwandung ist vertikal ausgerichtet oder ragt weiter als die Markierungskante in den Innenraum hinein. Dabei kann der unmittelbar oberhalb der Markierungskante anschließender Wandabschnitt der Seitenwandung weiter in den Innenraum der Gussform hineinragen als ein unmittelbar unterhalb der Markierungskante anschließender Abschnitt der Seitenwandung. Die Seitenwandung ist zwingend einstückig und eine gute Einstellbarkeit tritt insbesondere dann ein, wenn an beiden Seitenwandungen eine horizontal verlaufende Markierungskante angeordnet ist, wobei beide Markierungskanten auf der gleichen vertikalen Position (z-Richtung) angeordnet sind. In einer bevorzugten Ausgestaltung eines LED-Bandes, sind benachbarte Leuchtdioden in drei Freiheitsgraden gelenkig miteinander verbunden. Hierzu sind die benachbarten Leuchtdioden ausschließlich durch freiliegende Kabelleitungen miteinander verbunden und sind nicht auf einem Leitungsband oder auf einer bandförmigen Platine befestigt. Es ist ersichtlich, dass die freiliegenden Kabelleitungen für sich genommen Drehungen und Biegungen in allen Richtungen erlauben. Freiliegend bedeutet dabei, dass diese Kabelleitung (=Litze + Isolation der Litze) vor dem Eingießen von keinem Material umschlossen waren; nach dem Eingießen können die freiliegenden Kabel aber durch die Vergußmasse umschlossen sein. Ein Kabel kann mehrere Kabelleitungen umfassen.

Weiterhin ist zur ausreichenden Beleuchtung von Arbeitspositionen aus der DE 10 2012 019 074 A1 eine Leuchteinrichtung bekannt, welche eine Lichtquelle und einen Lichtschlauch aus einem lichtleitenden Material umfasst. Der Lichtschlauch und die Lichtquelle sind in mindestens zwei verschiedenen Zuständen miteinander koppelbar. Insbesondere im zweiten gekoppelten Zustand können sowohl das erste Ende als auch das zweite Ende mit der Lichtquelle derart gekoppelt sein, dass sowohl in das erste Ende als auch in das zweite, dem ersten Ende gegenüberliegende Ende des Lichtschlauchs von der dort angeordneten Lichtquelle abgegebenes Licht eingekoppelt wird. Der jede denkbare langgestreckte oder längliche Form aufweisende Lichtschlauch ist dazu ausgebildet, das eingekoppelte Licht abzustrahlen und kann flexibel oder biegbar oder formbar ausgebildet sein. Beispielsweise kann der Lichtschlauch schlauchförmig, röhrenförmig oder stabförmig geformt sein und einen runden, z.B. ellipsen- oder kreisförmigen Querschnitt aufweisen. Der Lichtschlauch kann jedoch auch einen eckigen, wie z. B. rechteckigen, quadratischen, v-förmigen oder dreieckigen, Querschnitt aufweisen. Die kontrollierte Führung der Lichtwellen im Lichtschlauch kann z. B. durch Reflexion an der Grenzfläche des Lichtleiters entweder durch Totalreflexion aufgrund eines geringeren Brechungsindex des den Lichtleiter umgebenden Mediums oder durch Verspiegelung der Grenzfläche erreicht werden. Der Lichtschlauch kann nahezu vollständig transparent ausgebildet werden, wobei als Material z. B. Kunststoff, Plexiglas oder andere Materialien mit lichtleitenden, z. B. transparenten, Eigenschaften verwendet werden. Zumindest ein Teil des mittels LEDs eingekoppelten Lichts kann über die Außenumfangsfläche des Lichtschlauchs, beispielsweise im Falle eines zylinder- oder schlauchförmigen Lichtschlauchs seine Mantelfläche, abgestrahlt werden. Die Abstrahlung von Licht über die Außenumfangsfläche kann zusätzlich oder alternativ zu dem Abstrahlen von Licht aus dem zweiten Ende in Form eines Lichtkegels gegeben sein. An der Außenumfangsfläche, beispielsweise an der Mantelfläche, des Lichtschlauchs kann zumindest ein Reflektor- und/oder Blendenelement vorgesehen sein, welches auf die Außenumfangsfläche des Lichtschlauchs aufgebracht, wie z. B. aufgeklebt ist. Alternativ kann das Reflektorelement z. B. im Lichtschlauch dadurch eingebracht sein, indem der Lichtschlauch zur Bildung des Reflektorelements aufgeraut ist. Zusätzlich oder alternativ zu dem Reflektor- und/oder Blendenelement kann der Austritt des Lichts über die Form des Querschnitts des Lichtschlauchs beeinflusst oder gesteuert werden. Hierfür kann der Querschnitt des Lichtschlauchs z. B. v- förmig oder dreieckig ausgebildet sein. An der Spitze des "Vs" bzw. des Dreieckes können sich verschiedenartige Riffeln befinden, die das Licht streuen. Um eine starke Lichtintensität und damit eine gute Ausleuchtung zu erreichen wird mittels LEDs/ Leuchtdiodengruppen von beiden Seiten in den Lichtschlauch Licht eingekoppelt, durch den Lichtschlauch transportiert und über die Mantelfläche des Lichtschlauchs an die Umgebung abgegeben. Es ist gemäß einer weiteren Ausgestaltung denkbar, dass sich das Reflektor- und/oder Blendenelement entlang der gesamten Längserstreckung des Lichtschlauchs und entlang der gesamten Außenumfangsfläche des Lichtschlauchs erstreckt, so dass in dem ersten gekoppelten Zustand ein Lichtaustritt nur aus dem zweiten Ende des Lichtschlauchs möglich ist.

Weiterhin sind aus der EP 2 886 949 A2 horizontal oder vertikal biegeelastische Leuchtdiodenbänder mit auf einem flexiblen Leitungsträger angeordneten Chip-Leuchtdioden und mit zwei in Abstrahlrichtung übereinander und zwischen den Schenkeln eines U-förmigen Gehäuseteils angeordnete Vergußmassen und Verfahren zu deren Herstellung bekannt, wobei das Gehäuse mit Deckel baukastenartig aufgebaut wird. Um einen Abstrahlwinkel über 180° mit einem homogenen Lichtaustritt, eine verbesserte Lichtausbeute und eine effektive Wärmeabfuhr zu ermöglichen, weist bei einer ersten Alternative das Leuchtdiodenband mindestens zwei an den Schenkeln angeformte Reflektoren auf, welche das Licht der an der Basis des Gehäuses angeordneten Chip-Leuchtdioden reflektieren. Die zweite Vergußmasse, welche transluzent ist, bildet an der Stirnseite der beiden Schenkeln eine dreiteilige Kappe derart aus, dass die zwei auf der Stirnseite der Schenkel angeordnete Kappenteile den Füllrand für das Einfüllen der ersten Vergußmasse, welche transparent ist, zwischen die Reflektoren bilden und danach die eingefüllte zweite Vergußmasse als drittes Kappenteil den Deckel schließt, wobei das Leuchtdiodenband vertikal in Erstreckungsrichtung biegeelastisch ist. Bei einer zweiten Alternative des Leuchtdiodenbands besteht mindestens der erste Schenkel des U-förmigen Gehäuses aus transluzenter, entsprechend dem Kapillareffekt in der Wandstärke sich verjüngender und in das Kunststoffmaterial des Gehäuses übergehenden zweiten Vergußmasse. An diesem Schenkel ist ein flexibler Leitungsträger angeordnet und in der ersten transparenten Vergußmasse eingebettet und das Licht der Chip-Leuchtdioden wird von den Innenflächen des Gehäuses reflektiert und durch die zweite Vergußmasse an der Stirnseite diffus abgestrahlt, wobei das Leuchtdiodenband horizontal in Erstreckungsrichtung biegeelastisch ist. Alternativ ist der flexible Leitungsträger mit den Chip-Leuchtdioden an der Basis angeordnet. Das Kunststoffmaterial des Gehäuses ist mit wärmeleitenden Füllstoffen, beispielsweise Keramik-Füllstoffen angereichert und dadurch wärmeleitend. In vorteilhafter Weise ist der Leitungsträger wärmeleitend und mit Klebeband an der Basis des Gehäuses angeklebt. Ein wärmeleitendes Klebeband übernimmt hier eine Doppelfunktion, nämlich Positionierung des Leitungsträgers vor dem Vergießen und Verbesserung der Wärmeableiteigenschaften, so dass Wärmestaus vermieden sind. Gleiches gilt für den Leitungsträger, nämlich Positionierung der LED's und Wärmeleitung einschließlich Vergrößerung der Oberfläche (Wärmestrahlung).

Bei einem ersten Herstellungsverfahren wird:
a) eine zweite Vergußmasse, welche flüssig und transluzent ist, in eine nach einer Seite hin offenen Vergußform, deren Konturenverlauf als sich von dieser Seite senkrecht erstreckende Schenkel und einer zur offenen Stirnseite sich erhebenden trapezförmigen Leiste ausgestaltet ist, zwischen den Schenkeln und der Schrägfläche der Leiste der Vergußform eingefüllt,
b) bis zum Füllrand der Vergußform das Kunststoffmaterial des Gehäuses derart eingefüllt, dass die beiden Schenkel mit angeformten Reflektoren, welche das Licht der an der Basis angeordneten Chip-Leuchtdioden reflektieren, und die Basis des U-förmigen Gehäuses ausgestaltet,
c) der flexible Leitungsträger mit den montierten Chip-Leuchtdioden im U-förmigen Gehäuse auf der Basis angeordnet,
d) die erste Vergußmasse, welche transparent ist, zwischen die Reflektoren eingefüllt und
e) die zweite Vergußmasse zwischen die zwei auf der Stirnseite der Schenkel angeordneten Kappenteile eingefüllt, wodurch diese als drittes Kappenteil den Deckel schließt.

Bei einem zweiten Herstellungsverfahren wird:
a) eine zweite flüssige transluzente Vergußmasse in eine nach einer Seite hin offene Vergußform, deren Konturenverlauf als sich von dieser Seite senkrecht erstreckenden Schenkel und einem zur offenen Stirnseite sich erhebenden Füllrand ausgestaltet ist, derart eingefüllt, dass diese zwischen dem Füllrand und einer Überlaufkante der Vergußform eine aufgrund des Kapillareffekts gekrümmte Oberfläche ausbilden,
b) das Kunststoffmaterial des Gehäuses bis zur Überlaufkante der Vergußform eingefüllt und dabei der erste Schenkel und die Basis des U-förmigen Gehäuses ausgebildet,
c) der flexible Leitungsträger mit den montierten Chip-Leuchtdioden in das U-förmige Gehäuse unterhalb einer an das Ende der zweiten Vergußmasse angrenzenden Nut des ersten Schenkels eingelegt,
d) die erste Vergußmasse bis zum inneren Rand der Basis und dem gegenüberliegenden Rand der zweiten Vergußmasse eingefüllt und
e) der zweite Schenkel des U-förmigen Gehäuses bis zum äußeren Rand der Basis und dem gegenüberliegenden Rand der zweiten Vergußmasse eingefüllt.

Alternativ wird im Verfahrensschritt c) der flexible Leitungsträger mit den montierten Chip-Leuchtdioden in das U-förmige Gehäuse an der Basis eingelegt.

Weiterhin ist aus der EP 2 892 078 A1 eine Beleuchtungseinrichtung und ein Verfahren zur Herstellung der Beleuchtungseinrichtung bekannt. Die Beleuchtungseinrichtung umfasst:
- eine oder mehrere Lichtstrahlungsquellen, z.B. LEDs,
- eine Treiberschaltung für die Lichtstrahlungsquelle (n) und
- einen Träger auf dessen Vorderseite Lichtstrahlungsquelle (n) und Treiberschaltung angebracht sind.

Weiterhin weist die vordere Fläche des Trägers einen vertikal zur Erstreckungsrichtung angeordneten länglichen Steg und beidseitig zum Steg einen vertieften Abschnitt auf. Die Lichtstrahlungsquelle (n) ist/sind an der Stirnfläche des länglichen Stegs angebracht und die Treiberschaltung ist in den vertieften Abschnitten angeordnet. Weiterhin sind die vertieften Abschnitte mit einem Maskierungsmaterial versehen, um die Treiberschaltung zur Vorderseite abzudecken. Schließlich ist zur Abdeckung der Lichtstrahlungsquelle (n) und des Maskierungsmaterials eine darüber angeordnete Schicht aus transparentem Material vorgesehen. Sowohl der Träger als auch das Maskierungsmaterial weisen eine helle Farbe, vorzugsweise eine weiße Farbe auf. Vorzugsweise weist der Träger ein U-förmiges Querschnittsprofil auf und ist in Erstreckungsrichtung flexibel. Das Verfahren zur Herstellung der Beleuchtungseinrichtung gemäß der EP 2 892 078 A1 umfasst:
- Bereitstellen mindestens einer elektrisch betriebenen Lichtstrahlungsquelle und einer Treiberschaltung für die mindestens eine Lichtstrahlungsquelle,
- Bereitstellen eines Trägers mit einer Vorderseite zur Befestigung der mindestens einen Lichtstrahlungsquelle und der Treiberschaltung, wobei die Vorderfläche des Trägers einen Steg und beidseitig zum Steg einen vertieften Abschnitt aufweist,
- Anbringen der mindestens einen Lichtstrahlungsquelle an dem Steg,
- Montieren der Treiberschaltung in den vertieften Abschnitten und
- Bereitstellen eines Maskierungsmaterials, das die Treiberschaltung in den vertieften Abschnitten bedeckt und
- Bereitstellen einer über der Schicht aus Maskierungsmaterial angeordneten zweiten Schicht aus einem transparenten Material, das die mindestens eine Lichtstrahlungsquelle und das Maskierungsmaterial in den vertieften Abschnitten bedeckt.

Schließlich ist aus der DE 10 2009 008 845 A1 ein Leuchtmodul, insbesondere flexibles Leuchtmodul, bekannt, welches mindestens ein Profil und ein in dem Profil angeordnetes Leuchtband aufweist. Das Leuchtband weist eine mit Halbleiterlichtquellen, insbesondere Leuchtdioden, bestückte Leiterplatte auf, wobei die Leiterplatte mit einer Vergussmasse blickdicht vergossen ist und wobei eine Leuchtfläche der Halbleiterlichtquellen von einer transparenten Deckschicht überdeckt ist. Die Vergussmasse kann weiß sein, was eine farbneutrale Reflexion von darauf gestreutem Licht ermöglicht. Dies kann insbesondere in optischen Systemen (z. B. zur Hinterleuchtung von diffusen Anzeigetafeln) vorteilhaft sein. Auch kann eine schwarze Vergussmasse vorgesehen werden, insbesondere wenn eine Lichtabgabe streng auf die Halbleiterlichtquellen beschränkt werden soll. Jedoch sind auch andere Farben möglich, z. B. aus dem RGB-Farbraum. Weiterhin kann die Deckschicht zur Erhöhung der Auskoppeleffizienz eine Funktion eines optischen Elements, z. B. einer Linse, übernehmen. Dazu kann sie beispielsweise an ihrer freien Oberfläche konkav oder konvex geformt sein. Die Deckschicht kann mittels jeglicher geeigneter Methode aufgebracht werden, z. B. mittels eines Vergusses. Die Deckschicht kann farbselektiv ausgestaltet sein, insbesondere mindestens einen farbselektiven Füllstoff aufweisen, z. B. einen sog. "Remote Phosphor". Eine farbselektive Deckschicht kann als eine farbselektiv absorbierende oder phosphorisierende bzw. fluoreszierende Deckschicht ausgestaltet sein. Dadurch kann die Deckschicht gezielt zur Erzeugung eines bestimmten Farbtons eingesetzt werden, indem ein durch sie hindurchlaufendes Licht bezüglich der entsprechenden Farbe(n) zumindest teilweise absorbiert oder konvertiert wird. In anderen Worten kann "farbselektiv" zumindest für einige Wellenlängen als "farbändernd" angesehen werden, und zwar durch zumindest teilweise Absorption bestimmter Wellenlängen und/oder durch Verstärkung bestimmter Wellenlängen. Die farbselektive Absorption kann insbesondere in Kombination mit mehrfarbigen und/oder weißen LEDs verwendet werden. Die farbselektive Fluoreszenz kann vorteilhaft in Kombination mit blauen LEDs oder UV-LEDs eingesetzt werden, insbesondere zum Erreichen eines Konversionseffekts. Das Leuchtmodul kann zur einfachen Verlegung als flexibles Leuchtmodul ausgestaltet sein. Dazu sind das Profil, die Vergussmasse, die Leiterplatte und die Deckschicht flexibel ausgeführt. Das Profil, die Vergussmasse und die Deckschicht können dazu aus Silikon gefertigt sein. Die Leiterplatte kann v mit ihrer nichtbestückten Unterseite bzw. Rückseite mit dem Profil verklebt sein, z. B. mittels eines - insbesondere blickdichten - Klebebands, z. B. Doppelklebebands. Die Halbleiterlichtquellen können zur Minimierung der Pfadlängen in der Deckschicht so angeordnet sein, dass ihre Hauptabstrahlrichtung nach oben (aus dem Profil heraus) weist. Die LEDs können dabei sog. Top-LEDs sein, deren Abstrahlrichtung bezüglich einer unterseitigen Auflagefläche nach oben gerichtet ist, wobei dann die Top-LEDs mit ihrer Auflagefläche insbesondere auf einem Boden des Profils aufliegen können. Die LEDs können aber beispielsweise auch sog. Side-LEDs sein, deren Abstrahlrichtung bezüglich einer unterseitigen Auflagefläche zu einer Seite gerichtet ist, wobei die Side-LEDs dann mit ihrer Auflagefläche insbesondere auf einer Seitenwand des Profils aufliegen können. Die Side-LEDs können also bezüglich ihrer waagerechten Ausrichtung um 90° gedreht an dem Profil befestigt, z. B. damit verklebt, sein und dann analog zu den Top-LEDs vergossen sein. Vorteilhafterweise kann die Halbleiterlichtquelle mit der Vergussmasse im Wesentlichen bis zu einer die jeweilige Leuchtfläche aufweisenden Oberfläche blickdicht vergossen sein. Dadurch kann der Körper der Halbleiterlichtquelle(n) blickdicht versteckt werden, und die Halbleiterlichtquelle(n) können auch in einem ausgestalteten Zustand gestalterisch hervorgehoben werden, während ihre Umgebung zurücktritt. Zur Wärmeabfuhr von dem Leuchtband, insbesondere den Lichtquellen, und folgender Wärmespreizung können die Vergussmasse und/oder die Deckschicht einen thermisch leitenden Füllstoff aufweisen. Zur Vermeidung von Schäden durch eine elektrostatische Entladung können die Vergussmasse und/oder die Deckschicht einen elektrisch leitenden Füllstoff aufweisen. Zur Brandvermeidung kann die Vergussmasse und/oder die Deckschicht vorteilhafterweise einen flammhemmenden Füllstoff aufweisen. Zur Vermeidung oder zumindest Unterdrückung einer Materialalterung können die Vergussmasse und/oder die Deckschicht einen Schwefel und/oder Luft bindenden Füllstoff aufweisen. Vorzugsweise weist die Vergussmasse und/oder die Deckschicht Silikon als Grundmaterial auf, da Silikon vergleichsweise alterungsbeständig, einfach handhabbar, flexibel bzw. elastisch ausgestaltbar und preiswert ist. Auch mag das Profil als Grundmaterial Silikon aufweisen, und zwar transparent oder farbig bzw. blickdicht. Das Leuchtmodul kann mindestens eine Trennstelle zum Auftrennen des Leuchtmoduls aufweisen, wobei das Leuchtband bzw. dessen Leiterplatte an der mindestens einen Trennstelle jeweils mindestens ein elektrisches Verbindungselement aufweist, welches durch ein Trennen an der Trennstelle zur elektrischen Verbindung vorbereitet oder vorbereitbar ist. Das Leuchtmodul ist vorteilhafterweise an den Trennstellen des Leuchtbands trennbar; die Trennstellen oder Trennlinien von Leuchtmodul und Leuchtband fallen somit zusammen. An den Kontaktstellen (wie den Trennstellen) kann die Leiterplatte mit geeigneten Hülsen. Kabeln und/oder Jumpern usw. bestückt sein, um ein Kontaktieren nach einem Trennen zu erleichtern. Die Leiterplatte kann alternativ oder zusätzlich mit Steckern und/oder Buchsen bestückt werden, welche durch das Auftrennen, z. B. Schneiden, des Leuchtmoduls freigelegt werden und kontaktiert werden können. Dies weist den Vorteil auf, dass die Leiterplatte nicht freigelegt zu werden braucht und eine Dichtigkeit des Leuchtmoduls unvermindert gegeben ist. Zur Erleichterung des Trennvorgangs kann das Leuchtmodul an einer Trennstelle vorteilhafterweise eine oder mehrere Sollbruchstellen aufweisen, z. B. eine perforierte Sollbruchstelle. Das LED-Modul gemäß der DE 10 2009 008 845 A1 kann mittels der folgenden Schritte hergestellt werden:
1) Herstellen des Leuchtbands in der richtigen Länge.
   a) Dazu kann das Leuchtband entsprechend zugeschnitten werden, und an den Endbereichen werden geeignete Bauelemente zur Vorbereitung einer Kontaktierung befestigt (z. B. Hülsen, Kabel, Jumper usw., die beispielsweise durch Schneidklemmen oder Piercingkontakte kontaktiert werden können).
   b) Die Leiterplatte kann an einer möglichen Trennstelle mit z. B. Steckern und/oder Buchsen bestückt werden, die durch einen Trennvorgang freigelegt und kontaktiert werden können.
2) Bereitstellen eines Profils bzw. einer Profilschiene
3) Zusammenführen von Leuchtband und Profil. Dies kann besonders vorteilhaft durch eine Rolle-zu-Rolle-Fügung durchgeführt werden.
   a) Vorteilhafterweise können auch Stromführungsleitungen in die Profilschiene eingelegt werden.
   b) Die Platine kann zur reduzierten Haftung der Vergussmasse an einem Trennbereich vorbereitet werden.
4) Vergießen des Profils und dadurch Vergießen des Leuchtbands bis zu einer Oberkante bzw. Oberfläche der Halbleiterlichtquellen mittels einer farbigen (einschließlich weißen oder schwarzen) Vergussmasse. Dieses Vergießen kann beispielsweise in zwei Schritten (Umgießen von auf der Leiterplatte befindlichen elektronischen Bauteilen (Transistoren, Widerstände usw.) mittels der Vergussmasse; und endgültiges Vergießen mittels der Vergussmasse. Der folgende Verguss wird auf die durch den ersten Vergussschritt bereits begradigte Oberfläche aufgegeben, wobei keine signifikante Blasenbildung mehr auftritt.).
5) Dispensieren bzw. Vergießen einer transparenten Deckschicht
6) Markieren der Trennstellen.
7) Oberflächenbehandeln, z. B. mittels einer Plasmabehandlung.

Wie die vorstehende Würdigung des Standes der Technik aufzeigt, sind unterschiedlich ausgestaltete Lichtschläuche, LED-Röhren und biegeelastische Leuchtdiodenbänder bekannt. Ausgehend von den horizontal oder vertikal biegeelastischen Leuchtdiodenbänder gemäß der EP 2 886 949 A2 fehlt in der Praxis eine flexible LED-Kette/LED-Leiste für den Innen-, Außen- sowie Unterwasserbereich mit einer Schutzart von bis zu IP68, welche einen homogenen Lichtaustritt von 360°-Abstrahlung, eine verbesserte Lichtausbeute und eine effektive Wärmeabfuhr hat. Besonders bedeutsam ist dies, weil die Beleuchtungsmittel herstellende Industrie als fortschrittliche, entwicklungsfreudige Industrie anzusehen ist, die schnell Verbesserungen und Vereinfachungen aufgreift und in die Tat umsetzt.

Der Erfindung liegt gegenüber den Leuchtdiodenbändern gemäß der EP 2 886 949 A2 die Aufgabe zugrunde, diese derart weiterzuentwickeln, dass dem Benutzer ein flexibles, d.h. biegbares Leuchtdiodenband zur Verfügung gestellt wird, welches einen Abstrahlwinkel von 360° mit einem homogenen Lichtaustritt und eine verbesserte Lichtausbeute aufweist und baukastenartig aufgebaut werden kann.

Diese Aufgabe wird, gemäß dem Patentanspruch 1, durch ein Leuchtdiodenband mit einem Gehäuse aus transluzenter Vergußmasse,
- mit einem im Innern des Gehäuses vertikal zur Erstreckungsrichtung angeordneten länglichen Steg, welcher mit dem Gehäuse in Verbindung steht,
- mit auf dem Steg angeordneten Chip-Leuchtdioden,
- mit einer teilweise reflektierenden Beschichtung der Innenseite des Gehäuses und
- mit einer das Gehäuseinnere auffüllenden transparenten Vergußmasse,
derart, dass das Licht der Chip-Leuchtdioden von den Innenflächen des Gehäuses teilweise reflektiert und durch die transluzente Vergußmasse des Gehäuses über 360° diffus abgestrahlt wird, wobei das Leuchtdiodenband vertikal zur Erstreckungsrichtung biegeelastisch ist, gelöst.

Weiterhin wird diese Aufgabe, bei einem Verfahren zur Herstellung eines Leuchtdiodenbands mit einer E-förmigen Vergußform gemäß Patentanspruch 14, gelöst, bei dem:
a) die Kontur des Steges durch Einfüllen einer Vergußmasse bis zur Oberkante der mittleren Nut der E-Form hergestellt wird,
b) in die beiden äußeren Schenkel der E-förmigen Vergußform die transluzente Vergußmasse des Gehäuses eingefüllt wird,
c) nach dem Aushärten der u-förmige Gehäuseteil mit angeformten Steg entformt wird,
c) der Steg mit Leuchtdioden bestückt wird,
d) eine transparente Vergußmasse bis zum freien Ende des Stegs eingefüllt wird und
e) eine transluzente Vergußmasse über die transparente Vergußmasse bis zum Rand der freien Schenkel des u-förmigen Gehäuseteils eingefüllt wird.

Die erfindungsgemäßen Leuchtdiodenbänder weisen die Vorteile auf, dass das Gehäuse baukastenartig aus Gehäuseteilen und inneren Steg als Träger für die Chip-Leuchtdioden zusammengesetzt werden kann und dass die Lichtaustrittsfläche beliebige Formen mit einer qualitativ hochwertigen Oberfläche annehmen kann. Weiterhin ermöglicht das baukastenartige Zusammensetzen des erfindungsgemäßen Leuchtdiodenbands die einzelnen Teile entsprechend der gewünschten Funktion (Wärmeleitung, Pigmentierung, Profilierung, Lichtaustritt) auszugestalten.

Weitere Vorteile und Einzelheiten lassen sich der nachfolgenden Beschreibung von bevorzugten Ausführungsformen der Erfindung unter Bezugnahme auf die Zeichnung entnehmen. In der Zeichnung zeigt:
- FIG. 1: eine erste Ausführungsform des Leuchtdiodenbands gemäß der Erfindung,
- FIG. 2: für das Leuchtdiodenband nach FIG. 1 und,
- FIG. 3: den ersten Verfahrensschritt, nämlich das Gießen des Stegs aus transparentem oder transluzenten oder weißem Vergussmaterial V3,
- FIG. 4: den zweiten Verfahrensschritt, nämlich das Gießen des U-förmigen Gehäuses,
- FIG. 5: das U-förmige Gehäuse mit dem Mittelsteg mit einer teilweise reflektierenden Beschichtung auf der Innenseite der Schenkel nach dem Entformen,
- FIG. 6: den dritten Verfahrensschritt, nämlich das Einkleben der Leiterplatten oder Platinen mit Klebeband beidseitig am Steg,
- FIG. 7: den vierten Verfahrensschritt, nämlich das Gießen der ersten transparenten Vergußmasse bis zum oberen Rand des Stegs,
- FIG. 8: eine zweite Ausführungsform des Leuchtdiodenbands mit einer Profilierung des Mittelstegs im Schnitt,
- FIG. 9: eine dritte Ausführungsform des Leuchtdiodenbands mit einem Mittelsteg und einem Doppelsteg,
- FIG. 10: eine vierte Ausführungsform des Leuchtdiodenbands mit nahezu rundum abstrahlenden Leuchtdioden angeordnet am Mittelsteg,
- FIG. 11a: eine Vergussform als Sechseck mit einfach ausgeführtem Mittelsteg,
- FIG. 11b: eine Vergussform als Oval mit einfach ausgeführtem Mittelsteg und
- FIG. 11c: eine Vergussform als V mit einfach ausgeführtem Mittelsteg,
- FIG. 12: eine fünfte Ausführungsform des Leuchtdiodenbands mit Halbrund ausgeführter Grundform,
- FIG. 13a: im Detail eine erste Ausgestaltung mit COG (Chip On Glas)-LEDs und
- FIG. 13b: im Detail eine zweite Ausgestaltung mit COG LEDs.

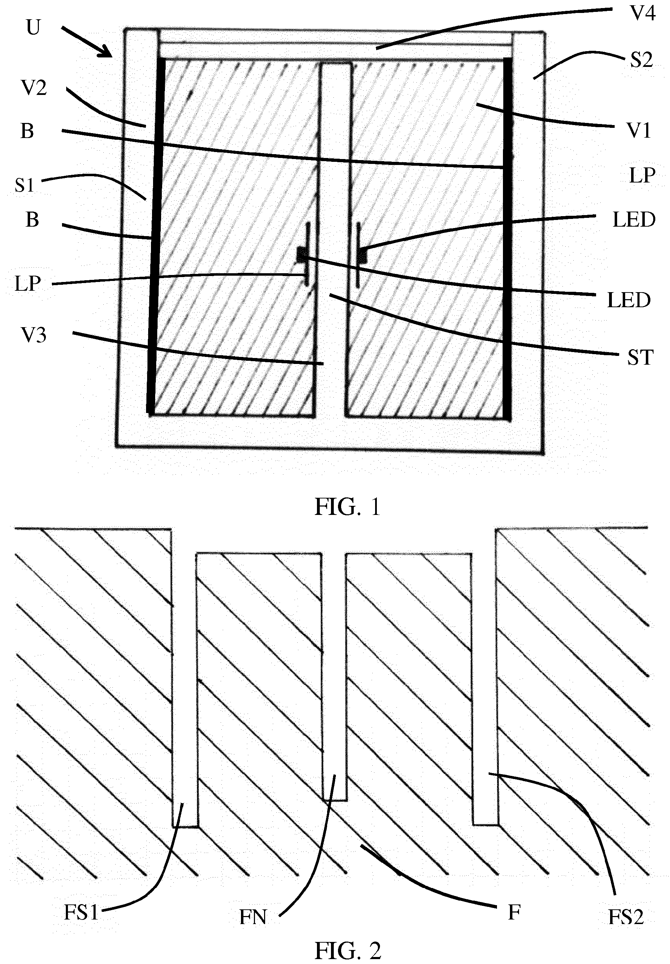

FIG. 1 zeigt eine erste Ausführungsform des Leuchtdiodenbands gemäß der Erfindung. Das Leuchtdiodenband weist ein baukastenartig aus transluzenter Vergußmasse V2 aufgebautes Gehäuse U auf. Im Innern des Gehäuses U ist ein vertikal zur Erstreckungsrichtung angeordneter länglicher Steg ST vorgesehen, welcher mit dem Gehäuse U in Verbindung steht. Auf dem Steg ST sind Chip-Leuchtdioden LED angeordnet und die Innenseite des Gehäuses U weist eine teilweise reflektierende Beschichtung B auf. Das Gehäuseinnere ist mit einer transparenten Vergußmasse V1 aufgefüllt, so dass das Licht der Chip-Leuchtdioden LED von den Innenflächen des Gehäuses U teilweise reflektiert und durch die transluzente Vergußmasse V2 und V4 des Gehäuses U über 360⁰ diffus abgestrahlt wird.

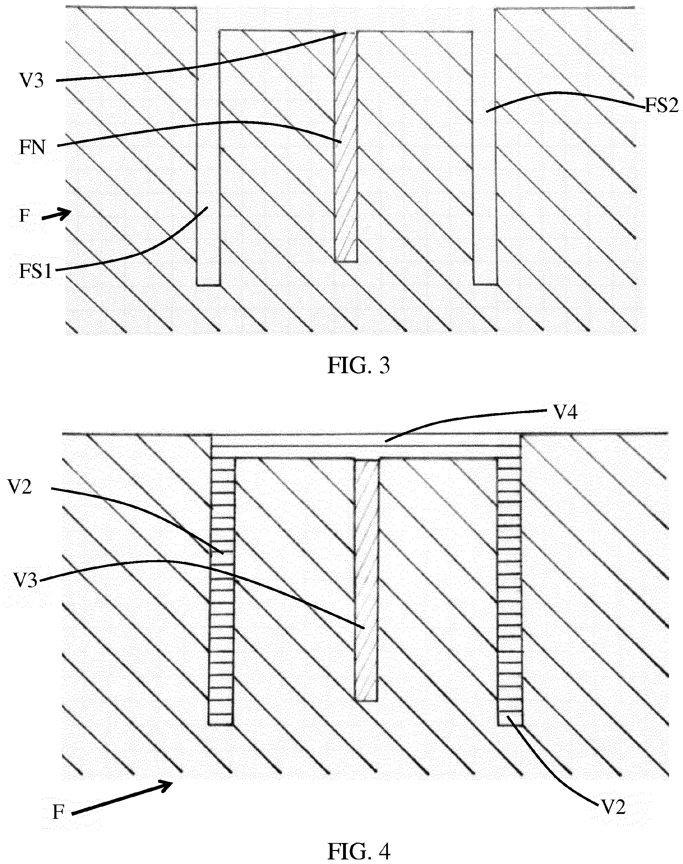

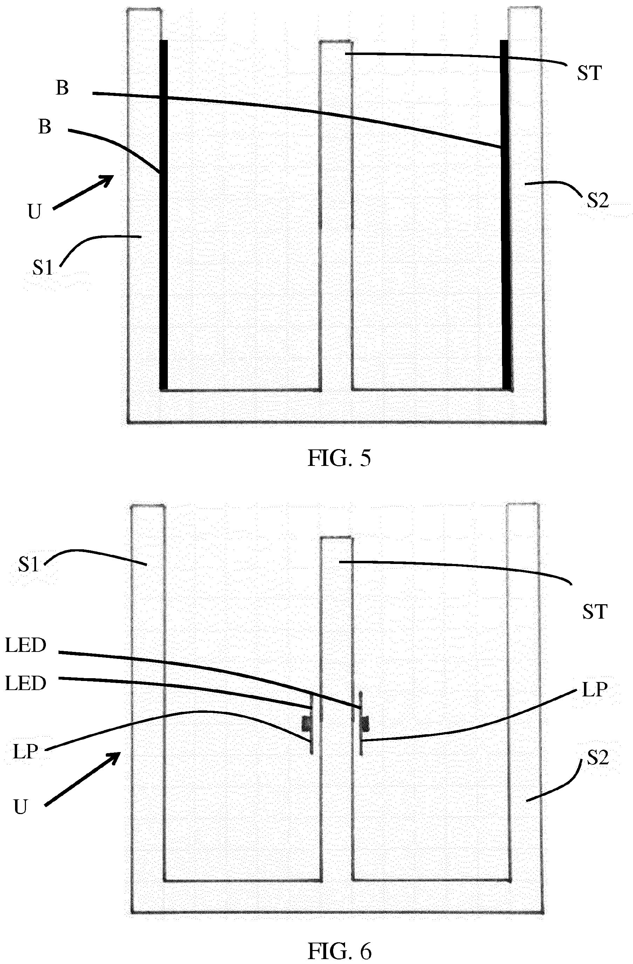

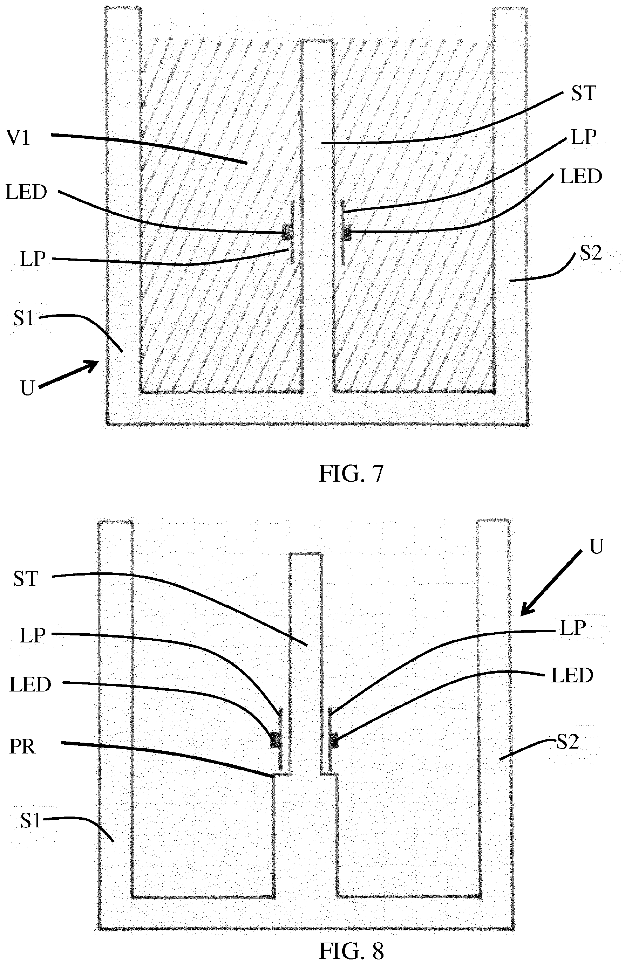

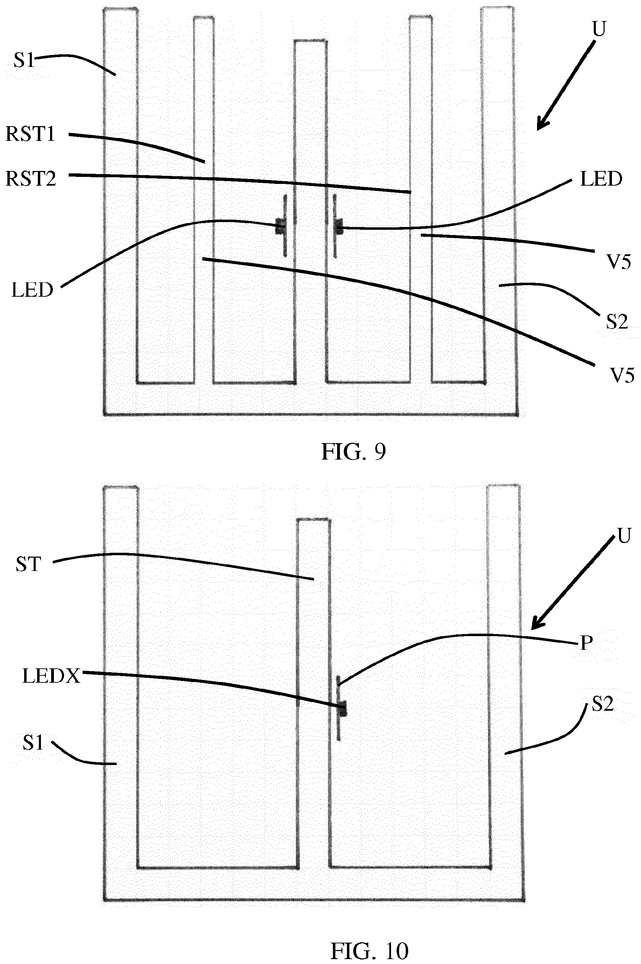

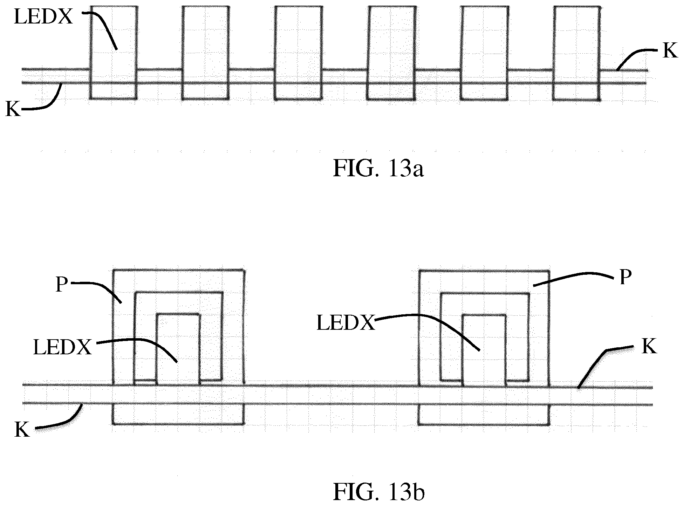

Im Einzelnen besteht der Steg ST aus transparentem oder transluzenten oder weißem Vergussmaterial V3 und die Steghöhe ist um ungefähr die Wandstärke des Gehäuses U kürzer. Insbesondere erstreckt sich der Steg ST in der Symmetrieebene des Gehäuses U und die Chip-Leuchtdioden LED sind Rücken an Rücken beidseitig oder bei rundum abstrahlenden Leuchtdioden LEDX (siehe FIG. 10) einseitig längs der Schwerelinie angeordnet. Das Gehäuse U ist im Querschnitt rechteckig, quadratisch, polygonal-, kreis-, dreiecks- oder ellipsenförmig, wobei in den in FIG.1 bis FIG 10 dargestellten Ausführungsformen das Gehäuse U quadratisch ist. Die Chip-Leuchtdioden LED sind auf einer flexiblen Leiterplatte LP oder auf mittels flexibler Leitungen miteinander seriell verbundenen Platinen P angeordnet; so dass eine Flexibilität in alle Richtungen ermöglicht wird. Insbesondere kann als flexible Leitung ein Kabel K benutzt werden, wodurch eine gut haftende Verklebung mit der transparenten Vergußmasse V1 erreicht wird. Weiterhin wird durch den Vollverguss das Eindringen von Feuchtigkeit in das erfindungsgemäße Leuchtdiodenband zuverlässig vermieden. Werden als Verbindungstücke für die elektrische Verbindung zwischen den Platinen P Kabel K benutzt (siehe FIG. 13a, FIG. 13 b), so sind trotz freier Beweglichkeit die Gefahr eines Leitungsbruchs und/oder ein Lösen von der Umhüllung stark vermindert. Wie FIG. 6, FIG. 9 und FIG. 10 aufzeigen sind die Leiterplatten LP oder Platinen P mit Klebeband am Steg ST angeklebt. Zur Positionierung der Chip-Leuchtdioden LED kann der Steg ST eine Profilierung PR aufweisen, wie dies in FIG. 8 mit einer Stufe dargestellt ist. Durch die Einbringung einer zusätzlichen Stufe PR ist sichergestellt, dass der LED-Streifen LED zentriert und ausgemittelt gegenüber den Außenschenkeln des Gehäuses U ist.

In Weiterbildung kann das erfindungsgemäße Leuchtdiodenband, wie in FIG. 9 ersichtlich, zusätzlich zwei im Abstand zum Mittelsteg ST parallel verlaufende reflektive Stege RST 1, RST 2 mit oder ohne Profilierung PR aufweisen, wodurch eine verbesserte Lichtverteilung erreicht wird. Wie FIG. 5 im Einzelnen aufzeigt, sind - um eine interne Reflexion für gleichmäßigere Ausleuchtung zu erreichen - die Schenkelinnenseiten des Gehäuses U mit teildurchlässigem reflektivem Material beschichtet, wobei in die Beschichtung B reflektierende Partikel eingelagert sind.

Das Verfahren zur Herstellung des Leuchtdiodenbands gemäß der ersten Ausführungsform mittels eines CNC-gestützten, in X + Y-Achsen verfahrbaren Dosierkopfs umfasst bei einer in der Zeichnung FIG. 1 bis FIG. 8 und FIG. 10 dargestellten E-förmigen Vergußform F folgende Arbeitsschritte:
a) die Kontur des Steges ST wird durch Einfüllen einer Vergußmasse V3 bis zur Oberkante der mittleren Nut der E-Form F - bzw. bei vielfach Nuten jeweils diese (siehe FIG. 9) - hergestellt,
b) in die beiden äußeren Schenkel S1, S2 der E-förmigen Vergußform F wird eine transluzente Vergußmasse V2 eines u-förmigen Gehäuseteils des Gehäuses U bis zur Oberkante der Vergußform F eingefüllt,
c) nach dem Aushärten wird der u-förmige Gehäuseteil mit angeformten Steg ST entformt,
d) der Steg T wird mit Leuchtdioden LED bestückt,
e) eine transparente Vergußmasse (V1) wird bis zum freien Ende des Stegs ST eingefüllt und
f) eine transluzente Vergußmasse V4 wird über die transparente Vergußmasse V1 bis zum Rand der freien Schenkel des u-förmigen Gehäuseteils eingefüllt.

Bei einer Vergußform mit beispielsweise zwei im Abstand zum Mittelsteg ST parallel verlaufende reflektive Stege RST 1, RST 2 wird im Verfahrensschritt a) eine Vergußmasse V5 (welche nicht zwangsläufig dasselbe Material wie die Vergussmasse V3 ist), welche reflektiv sein kann, ebenfalls in die Nuten (Mittelsteg ST und Stege RST 1, RST 2) der Vergußform F eingefüllt.

Weiterhin kann nach dem Verfahrensschritt c) in einem weiteren Verfahrensschritt c1) eine semitransparente Reflektionsschicht B auf den Innenseiten der Außenschenkel S1, S2 des Gehäuses U für eine homogenere Ausleuchtung aufgebracht werden.

Im Verfahrensschritt d) wird der Steg ST vorzugsweise mit Chip-Leuchtdioden LED bestückt; alternativ können auch LED Streifen in Flip-Chip oder in 360° COG (Chip on Glas)-Technologie mit einseitiger Bestückung benutzt werden, wie dies in FIG. 10 dargestellt ist. Durch Einbringung einer zusätzlichen Stufe (in FIG. 10 nicht dargestellt) ist sichergestellt, dass der LED-Streifen LED zentriert und ausgemittelt gegenüber den Außenschenkeln S1, S2 ist.

Zusammenfassend ist der Aufbau des erfindungsgemäßen rundum abstrahlendenden flexiblen LED Stab/ Leuchtdiodenbands wie folgt:
Als Grundform der in FIG. 2 dargestellten Negativ-Abgußform dient ein gleichschenkliges "U Profil" aus transluzentem Material V2 mit einem transparent, transluzenten oder weiß und/oder wärmeleitenden ausgeführt Steg/Mittelsteg ST, welcher mittig zwischen den Außenschenkeln des "U-Profils" eingebracht ist und mit dem transluzenten Boden des "U-Profils" verbunden ist, jedoch vorzugsweise nicht die Länge der transluzenten Außenschenkel S1, S2 aufweist, sondern kürzer ausgeführt ist. Die Innenseite der Außenschenkel kann in einer Art und Weise durch Beschichtung B mit reflektiven (weiß, Nanopartikel) Materialien verändert werden, dass ein möglichst gleichmäßiges Lichtbild erzielt wird. In diesem beschrieben transluzenten U-Profil des Gehäuses U ist auf beiden Flanken des/der mittig angebrachten, vorzugsweise transparenten Steges/Stege ST je ein LED-Streifen LED in einer Art und Weise aufgebracht, dass die LEDs zentrisch gegenüber der Innenseite der transluzenten Außenschenkel S1, S2 des "U Profils" positioniert sind. Durch diesen Aufbau wird eine gleichmäßige Hinterleuchtung der transluzenten Außenschenkel S1, S2 erreicht.

Der Innenraum in diesem mit vorzugsweise zwei LED-Streifen bestückten transluzenten "U Profil" ist mit vorzugsweise klarer, flexibler Vergußmasse V1 aufgefüllt und mit einer transluzenten Schicht V4 abgeschlossen. Die Schicht V4 sowie die Grundfläche der E-Form kann auch optional weiß ausgeführt werden, um eine veränderte Abstrahlcharakteristik zu erzielen. Der geschlossene, gleichschenklige vergossene Stab ist somit von außen blickdicht mit transluzenten Material V2 geschlossen und ummantelt. Die Elektronik ist durch die Ummantelung vor Umwelteinflüssen geschützt. Durch den klar ausgeführten, mit beidseitig LED-Streifen LED bestückten, Mittelsteg ST wird das von den LEDs emittierten und teilweise von den transluzenten Außenschenkeln S1, S2 reflektiertem Licht minimal absorbiert und kann sich innerhalb der vier transluzenten Seiten im Inneren des Stabes frei ausbreiten, wodurch eine möglichst gleichmäßige Hinterleuchtung der transluzenten Außenschicht erreicht wird.

In der Weiterbildung der Erfindung mit einer LED Type, welche nach oben an die transluzente Schicht V4 und nach unten durch den transparenten Steg ST auf die gegenüberliegende transluzente AußenschichtV2 leuchtet, ist nur noch ein LED-Streifen anstelle zweier LED-Streifen notwendig.

In Weiterbildung hierzu kann der LED-Streifen durch eine LED-Kette ersetzt werden, das bedeutet, dass das bestehende durchgängige und flexible Leiterplattenmaterial LP durch eine mittels flexiblen Leitungen K verbundene Aneinanderreihung von Platinen P, d.h. serielle Verdrahtung, ersetzt ist (siehe FIG. 13a, FIG. 13 b).

Durch die Verwendung von COG (Chip On Glas)-LEDs als Leuchtdiode LED, welche eine Rundum-Abstrahlcharakteristik durch ihr Glassubstrat aufweisen, kann durch ein kettenförmiges Aneinanderreihen der COG LEDs (FIG. 13a: LEDX) eine Rundumabstrahlung der LEDs erreicht werden.

Eine weitere Möglichkeit des Einsatzes der COG-LEDs (LEDX) ist das Aneinanderreihen von kleinen Platinen P mit integrierter Ansteuerelektronik, welche ein mittleres Loch, über das die COG-LED (LEDX) hinausragt, verfügt (FIG. 13b). Durch dieses Loch kann die COG LED (LEDX) ihr Licht nach oben und unten, quasi rundum, abstrahlen. Bei beiden Ausgestaltungen ist das einseitige Bestücken mit COG LED (LEDX) des Mittelsteges ST ermöglicht

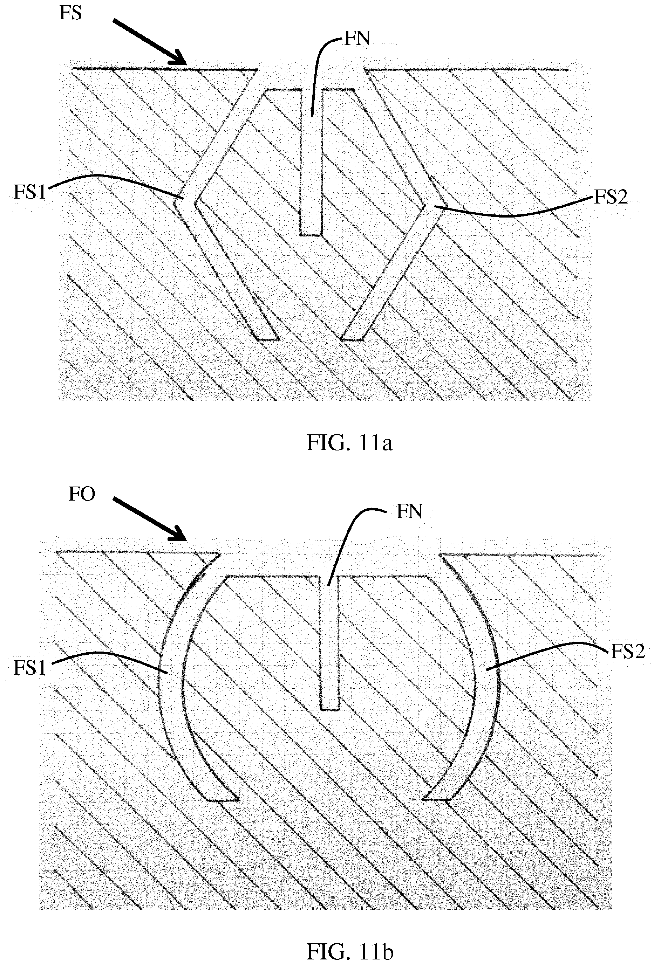

FIG. 11a zeigt eine Vergussform FS als Sechseck mit einfach ausgeführtem Mittelsteg ST. Das Gießen- und Entformen des Leuchtkörpers erfolgt analog zu dem rechteckigen Querschnitt, wie dies vorstehend anhand der FIG. 1 bis FIG. 10 näher beschrieben und erläutert wurde.

Das bedeutet auch hier wird im ersten Schritt der Mittelsteg ST mit vorzugsweise klarem Vergussmaterial V3 in die mittlere Nut FN gefüllt, danach wird die Form FS in deren äußere Schenkel FS 1, FS2 bis zu Ihrer Oberkante mit vorzugsweise transluzentem Material V1 aufgefüllt und dadurch werden auch die C-förmigen Außenschenkel S1 und S2 hergestellt.

Die Hinterschnitte in der Form FS sind durch die Eigenschaften a) der Abgußform und b) des Außenmaterials (Mantel) als unproblematisch zu sehen. Die Form FS (ebenso wie die Form F) sowie das Vergussmaterial sind biegeelastisch und gleichen die bei der Entformung auftretenden Kräfte aus.

FIG. 11b zeigt eine Vergussform FO als Oval mit einfach ausgeführtem Mittelsteg. Die ovale Form bietet gegenüber den polygonal ausgestalteten Formen (siehe FIG. 11a) den Vorteil, dass die Ausleuchtung gleichmäßiger ist, da die Abstrahlung des Lichtes der LEDs radialsymetrisch zum Brennpunkt, den Mittelsteg ST, zu den beiden äußeren kreisrunden Halbschalen S1, S2 erfolgt. Somit ist die Intensität auf dem Leuchtenkorpus gleichmäßiger.

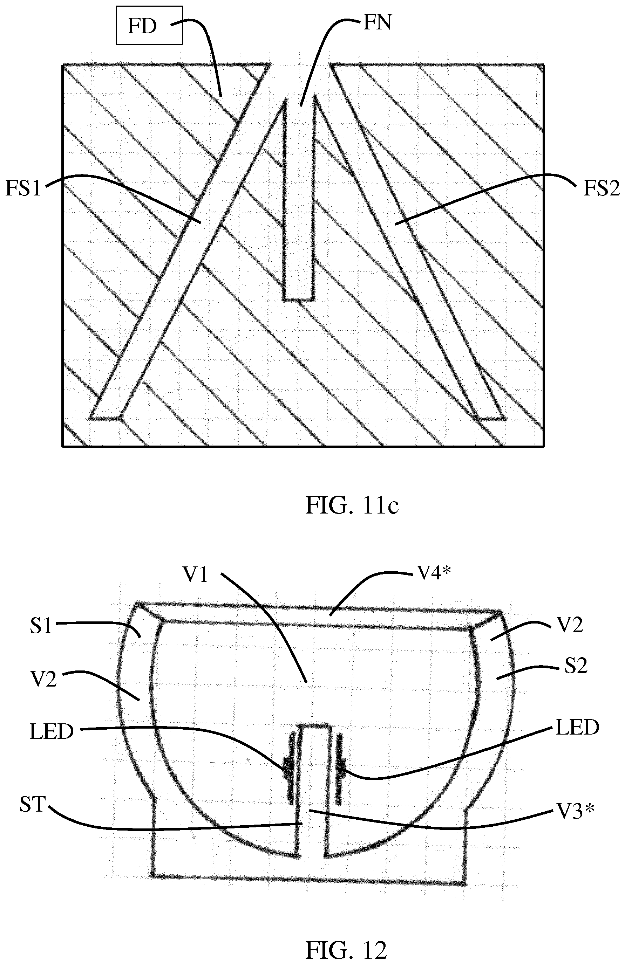

FIG. 11c zeigt eine Vergussform FD als V (ein längliches biegsames Band, meist ca. 10m lang) mit einfach ausgeführtem Mittelsteg ST zur Herstellung eines dreieckigen Leuchtenkorpus. Dabei ist vorzugsweise der Mittelsteg ST transparent und die Außenstege S1, S2 vorzugsweise transluzent. Die Herstellung erfolgt analog zu dem vorstehend beschriebenen Herstellungsverfahren.

FIG. 12 zeigt eine fünfte Ausführungsform des Leuchtdiodenbands mit Halbrund ausgeführter Grundform. Diese Ausführungsform wird analog zu den vorher beschriebenen Produktionsschritten hergestellt, insbesondere aus vorzugsweise weiß- oder teildurchlässigen, reflektivem Material V2 und mit einem Mittelsteg ST aus vorzugsweise wärmeleitenden Vergussmaterial V3*. Aufgefüllt wird der Raum zwischen den beiden Schenkeln S1 und S2 des Gehäuses U mit transparenten Vergussmaterial V1 und dann abgeschlossen mit einer transparenten Vergussschicht V4* - ggf. linsenartig ausgeführt, um beispielsweise eine Beleuchtung der Arbeitsfläche zu erzielen- oder einer transluzenten Vergussschicht V4, um die jeweils gewünschte Abstrahlcharakteristik zu erzielen.

Die Halte(r)möglichkeiten der Ausführungsformen des Leuchtdiodenbands gemäß der Erfindung sind wie folgt. Durch eine entsprechende Profilierung der Außenschenkel S1, S2, bei symmetrischen Querschnitt, kann mittels eines vorgespannten Halters aus Kunststoff oder Federstahl, welche in die negative Profilierung greift, eine entsprechende Haltevorrichtung vorgesehen werden, welche einfach und schnell zu montieren ist. Alternativ kann ein Haltebügel, mit Vorspannung, welcher sich nach oben hin verjüngt und in welchem die gegossene Leuchte/ Leuchtdiodenband eingeschnappt wird, als Montagehalter verwendet werden.

Eine weitere Befestigungsmöglichkeit ist eine Nut mit Hinterschnitt versetzt zum Mittelsteg ST in dem Leuchtenkörper selbst vor zu sehen. In dieser hinterschnittenen Nut wird ein pilzförmiger Halter eingeschoben und eingerastet, welcher den Leuchtenkörper hält.

Durch den Einsatz von zwei LED Modulen LED auf dem Mittelsteg ST können auch diese auch unabhängig voneinander angesteuert werden. Beispielsweise können durch verschiedenfarbige LED-Streifen dekorative Effekte durch ein unterschiedliches dimmen der Streifen LED erreicht werden; so kann die Farbmischung im Leuchtenkörper variabel und dynamisch gestaltet werden. Das gleiche Prinzip lässt sich auch auf unterschiedliche Weißtöne übertragen, somit kann eine Leuchte von einem warmen Weißton hin zu einem kühlen Weißton variabel eingestellt werden. Beispielsweise um eine Tageslichtsimulation nachzubilden (Früh-Abends Warmweiß, Tagsüber Kaltweiß).

Eine weitere Möglichkeit, bei dem Einsatz von mehreren (zwei oder mehr) LED Streifen auf dem Mittelsteg ST , dass ein Strang von LED Modulen zu Notbeleuchtungszwecken genutzt werden. Bedeutet in der Praxis bei Stromausfall fällt zwar die primäre Ausleuchtung des Leuchtkörpers aus, jedoch wird über den getrennt ausgeführten Kanal eine Notbeleuchtung, insbesondere ein auf dem Mittelsteg aufgebrachter Strang von LED Modulen gespeist.

Die Erfindung ist nicht auf die dargestellten und beschriebenen Ausführungsbeispiele beschränkt, sondern umfasst auch alle im Sinne der Erfindung gleichwirkende Ausführungen. Anstelle von Leuchtmodulen in Form von flexiblen LED-Streifen LED ist der Einsatz von:
- Einzelplatinen mit LED Modulen und dazugehöriger Ansteuerelektronik, jeweils vorzugsweise verbunden mit einem Einzelkabel um Biege- und Torsionskräfte optimal aufzunehmen,
- flexibles Leiterplattenmaterial, welches die einzelnen LEDs mit mäanderförmigen flexiblen Leiterplattenmaterial verbindet, um Biege- und Torsionskräfte optimal aufzunehmen,
im Rahmen der Erfindung möglich.

Insbesondere kann im Rahmen der Erfindung eine Konversationsschicht in Form einer geeigneten Farbfilterfolie angebracht werden; vorzugsweise auf der Innenseite der Außenschenkel S1, S2 Partikelbeschichtung oder entsprechend eingefärbte Vergußmasse. In Weiterbildung hierzu wird in einem zusätzlichen Schenkel zwischen dem Mittelsteg ST und dem Außenschenkel S1 (S2), ein vor allem im Dekobereich interessanter Effekt ermöglicht. Somit kann ein effektvoller Mischeffekt durch unterschiedliche Folien, Beschichtungen oder Farbstege, sowie verwendete LED Farben erzeugt werden.

Insbesondere kann im Rahmen der Erfindung eine Prägung zur Erzielung von visuellen Effekten vorgenommen werden. Eine Vielzahl an interessanten visuellen Effekten wird durch das Einprägen von Konturen, Mustern, oder Schriftzügen auf der Außenseite und/oder auf der Innenseite der Außenschenkel S1, S2 und/oder als Prägung der Mittelstege ST bzw. Stege RST 1, RST 2 für Schatteneffekte auf den Außenschenkel, ermöglicht.

Ferner ist die Erfindung bislang auch noch nicht auf die in den Patentansprüchen 1 und 14 definierten Merkmalskombinationen beschränkt, sondern kann auch durch jede beliebige andere Kombination von bestimmten Merkmalen aller insgesamt offenbarten Einzelmerkmalen definiert sein. Dies bedeutet, dass grundsätzlich praktisch jedes Einzelmerkmal der Patentansprüche 1 und 14 weggelassen bzw. durch mindestens ein an anderer Stelle der Anmeldung offenbartes Einzelmerkmal ersetzt werden kann.

## Patentansprüche

1. Leuchtdiodenband mit:
• einem Gehäuse (U) aus transluzenter Vergußmasse (V2, V4),
• mit einem im Innern des Gehäuses (U) vertikal zur Erstreckungsrichtung angeordneten länglichen Steg (ST), welcher mit dem Gehäuse (U) in Verbindung steht,
• mit auf dem Steg (ST) angeordneten Chip-Leuchtdioden (LED),
• mit einer teilweise reflektierenden Beschichtung (B) der Innenseite des Gehäuses (U) und
• mit einer das Gehäuseinnere auffüllenden transparenten Vergußmasse (V1), derart, dass das Licht der Chip-Leuchtdioden (LED) von den Innenflächen des Gehäuses (U) teilweise reflektiert und durch die transluzente Vergußmasse (V2) des Gehäuses (U) über 360⁰ diffus abgestrahlt wird, wobei das Leuchtdiodenband vertikal zur Erstreckungsrichtung biegeelastisch ist.

2. Leuchtdiodenband nach Anspruch 1, **dadurch gekennzeichnet, dass** der Steg (ST) aus transparentem oder transluzenten oder weißem Vergussmaterial (V3) besteht und dass die Steghöhe um ungefähr die Wandstärke des Gehäuses (U) kürzer ist.

3. Leuchtdiodenband nach Anspruch 1 oder 2, **dadurch gekennzeichnet, dass** der Steg (ST) sich in der Symmetrieebene des Gehäuses (U) erstreckt und die Chip-Leuchtdioden (LED) Rücken an Rücken beidseitig oder bei rundum abstrahlenden Leuchtdioden (LEDX) einseitig längs der Schwerelinie angeordnet sind.

4. Leuchtdiodenband nach einem oder mehreren der Ansprüche 1 bis 3, **dadurch gekennzeichnet, dass** das Gehäuse (U) im Querschnitt rechteckig, quadratisch, polygonal-, kreis- oder ellipsenförmig ist.

5. Leuchtdiodenband nach einem oder mehreren der Ansprüche 1 bis 4, **dadurch gekennzeichnet, dass** die Chip-Leuchtdioden (LED) auf einer flexiblen Leiterplatte (LP) oder auf mittels mit einem Kabel (K) miteinander seriell verbundenen Platinen (P) angeordnet sind.

6. Leuchtdiodenband nach Anspruch 5, **dadurch gekennzeichnet, dass** die Leiterplatten (LP) oder Platinen (P) mit Klebeband am Steg (ST) angeklebt sind.

7. Leuchtdiodenband nach einem oder mehreren der Ansprüche 1 bis 6, **dadurch gekennzeichnet, dass** zur Positionierung der Chip-Leuchtdioden (LED) der Steg (ST) eine Profilierung (PR) aufweist.

8. Leuchtdiodenband nach einem oder mehreren der Ansprüche 1 bis 7, **dadurch gekennzeichnet, dass** das Leuchtdiodenband zusätzlich zwei im Abstand zum Mittelsteg (ST) parallel verlaufende reflektive Stege (RST 1, RST 2) mit oder ohne Profilierung (PR) aufweist.

9. Leuchtdiodenband nach einem oder mehreren der Ansprüche 1 bis 8, **dadurch gekennzeichnet, dass** in die Beschichtung (B) reflektierende Partikel eingelagert sind.

10. Leuchtdiodenband nach einem oder mehreren der Ansprüche 1 bis 9, **dadurch gekennzeichnet, dass** COG (Chip On Glas)-LEDs als Leuchtdiode (LEDX) vorgesehen sind, welche eine Rundum-Abstrahlcharakteristik durch ihr Glassubstrat aufweisen, so dass durch ein kettenförmiges Aneinanderreihen der COG LEDs (LEDX) eine Rundumabstrahlung erreicht wird.

11. Leuchtdiodenband nach Anspruch 10, **dadurch gekennzeichnet, dass** Platinen (P) mit integrierter Ansteuerelektronik, welche ein mittleres Loch aufweisen über das die COG-LEDs (LEDX) hinausragen, aneinandergereiht sind und dass durch dieses Loch die COG LEDs (LEDX) ihr Licht nach oben und unten, annähernd rundum, abstrahlen.

12. Leuchtdiodenband nach einem oder mehreren der Ansprüche 1 bis 11, **dadurch gekennzeichnet, dass** zum Halten des Leuchtdiodenbands das Schenkel (S1, S2) aufweisende Gehäuse (U) an der Mantelfläche eine Profilierung aufweist und dass eine Haltevorrichtung vorgesehen ist, welche in die Profilierung eingreift oder dass eine Nut mit Hinterschnitt versetzt zum Mittelsteg (ST) vorgesehen ist und in diese hinterschnittene Nut ein pilzförmiger Halter eingeschoben und eingerastet ist.

13. Leuchtdiodenband nach einem oder mehreren der Ansprüche 1 bis 12, **dadurch gekennzeichnet, dass** auf der Innenseite der Schenkel (S1, S2) eine Partikelbeschichtung angebracht ist oder eine eingefärbte Vergußmasse (V1) eingebracht ist.

14. Verfahren zur Herstellung eines Leuchtdiodenbands mit einer E-förmigen Vergußform (F) nach Anspruch 1, bei dem:
a) die Kontur des Steges (ST) durch Einfüllen einer Vergußmasse (V3) bis zur Oberkante der mittleren Nut der E-Form (F) hergestellt wird, b) in die beiden äußeren Schenkel (S1, S2) der E-förmigen Vergußform (F) eine transluzente Vergußmasse (V2) eines u-förmigen Gehäuseteils des Gehäuses (U) eingefüllt wird,
c) nach dem Aushärten der u-förmige Gehäuseteil mit angeformten Steg (ST) entformt wird,
d) der Steg (ST) mit Leuchtdioden (LED) bestückt wird,
e) eine transparente Vergußmasse (V1) bis zum freien Ende des Stegs (ST) eingefüllt wird und
f) eine transluzente Vergußmasse (V4) über die transparente Vergußmasse (V1) bis zum Rand der freien Schenkel (S1, S2) des u-förmigen Gehäuseteils eingefüllt wird.

15. Verfahren nach Anspruch 10, bei dem:
nach dem Verfahrensschritt c) in einem weiteren Verfahrensschritt c1) eine semitransparente Reflektionsschicht (B) auf den Innenseiten der Außenschenkel (S1, S2) des Gehäuses (U) aufgebracht ist.
